# EUROPÄISCHE PATENTANMELDUNG

(11) **EP 4 429 083 A1**
(43) Veröffentlichungstag der Anmeldung: **11.09.2024**
(21) Anmeldenummer: 24154168.9
(22) Anmeldetag: 26.01.2024
(51) Int. Cl.: H02K 7/106, H02K 49/10

(54) **HALTEVORRICHTUNG UND HALTESYSTEM**

(30) Priorität: 24.02.2023 DE 102023104617; 22.01.2024 DE 102024101758
(71) Anmelder: Bühler Motor GmbH, 90459 Nürnberg (DE)
(72) Erfinder: Bretschneider, Kai, 90471 Nürnberg (DE); Hofmann, Gerhard, 90613 Großhabersdorf (DE); Wahhoud, Mohammad, 90443 Nürnberg (DE)

(57) **Zusammenfassung**

Haltevorrichtung (1) umfassend ein Weicheisenelement (2) und einen Magneten (3), welche konzentrisch zueinander angeordnet sind, wobei der Magnet (3) in Wirkverbindung mit dem Weicheisenelement (2) in einem statischen Zustand ein Haltemoment auf eine Welle (4) ausübt, wobei der Magnet (3) auf der Welle (4) angeordnet ist, am Innenumfang des Weicheisenelements (UE), und eine zweite rotierende Komponente (K2) bildet und wobei die Haltevorrichtung (1) mit einem der beiden Lagerschilde (5, 6) eines elektrischen Antriebs (7) in Verbindung steht.

## Beschreibung

Die Erfindung betrifft eine Haltevorrichtung gemäß Anspruch 1 oder Anspruch 2 und ein Haltesystem gemäß Anspruch 13.

Es sind aus dem Stand der Technik elektrische Antriebe wie Elektromotoren mit integrierten oder angebauten Vorrichtungen zur direkten Einflussnahme auf die Bewegungsfähigkeit einer rotierenden Antriebswelle der Elektromotoren bekannt, um die daran angebauten Applikationen (beispielsweise ein elektrisch betriebenes Rollo) beispielsweise abzubremsen oder an einer bestimmten Position zu halten. Gleichzeitig ist es wünschenswert und auch bekannt, die Welle auf dieser Position zu "verriegeln", also so lange wie gewünscht in Position zu halten. Hierfür ist es nötig, dass während dieses statischen Zustands ein Haltemoment auf die Welle durch die Vorrichtung oder den Elektromotor ausgeübt wird. Das damit einhergehende Haltemoment (also das Moment, das die Welle oder den elektrischen Antrieb im Stillstand hält, ohne dass die Welle weiterdrehen kann) muss erst durch die Vorrichtung bzw. der Kraft des Elektromotors überwunden werden, bevor die Welle sich wieder drehen kann, bzw. in einen dynamischen Betrieb übergehen kann (um beispielsweise ein elektrisch betriebenes Rollo ganz zu schließen oder zu öffnen).

Bekannt ist es, das Haltemoment auf die Welle mittels einer elektromagnetisch funktionierenden Haltevorrichtung auszuüben, bei der die Bremskraft über die gezielte Elektrifizierung einer elektrischen Spule erzeugt wird (bzw. nicht-Elektrifizierung). Diese Art von Haltevorrichtung kann an dem Elektromotor separat angebaut und mit diesem ein Haltesystem bilden oder im Elektromotor selbst verbaut sein. Nachteilig ist neben einem kostentreibenden, aufwendigen und komplizierten Aufbau derartiger Haltevorrichtungen (eine mögliche) hohe begleitende Geräuschentwicklung beim Betrieb, die für Nutzer unangenehm sein kann. Weiterhin bekannt ist der Einsatz einer angebauten elektromagnetischen Bremse, getrieben mit Selbsthemmung, durch Federkraft oder allgemein ein rastmomenterhöhendes Motordesign. Es ist ferner bekannt die Erhöhung des Haltemoments durch Anpassungen in einem angebauten Getriebeteil des Elektromotors einzustellen (beispielsweise ist hierzu ein Schneckengetriebe vorgesehen). In den meisten bekannten Fällen führen derartige Maßnahmen zu schlechteren Wirkungsgraden und höherem Verschleiß der Bauteile.

Problematisch ist auch, dass im Falle eines Ausfalls der Energieversorgung (Stromausfall, leere Batterie oder dergleichen) eine elektrisch betriebene Haltevorrichtung die Welle nicht mehr auf einer gewünschten Position verriegeln kann und somit die mit der Welle verbundene Applikation (bspw. ein Rollo) sich widerstandslos und ungebremst aus der Position begibt, womit potentielle Unfallgefahr besteht. Es ist daher wichtig, das nötige Haltemoment dauerhaft, stabil und ununterbrochen auf die Welle auszuüben. Ein Haltemoment, das ein Elektromotor selbst aufbringen kann, ist meist nicht ausreichend genug wenn das Gewicht der verbundenen Last (wie etwa ein Rollo oder ein Rolltor) zu hoch ist, weshalb es nötig ist, ein erhöhtes Haltemoment auf die Welle auf eine andere Weise bereitzustellen.

Eine weitere Wichtigkeit kommt der überlegten Konstruktion derartiger Haltevorrichtungen beim Einsatz für Rohrmotoren, beispielsweise für elektrisch betriebene Rollos, zu, bei denen durch die röhrenförmige Ausgestaltung von Motor und Anbauteilen der zur Verfügung stehende Platz sich axial erstreckt und daher kompakt ausgeführt sein muss.

Aufgabe der vorliegenden Erfindung ist es daher, eine Haltevorrichtung vorzuschlagen, welche die erläuterten Nachteile des Stands der Technik überwindet und insbesondere ein signifikant erhöhtes Haltemoment auf die Welle stabil und zuverlässig im statischen Zustand der Welle bereitstellen kann, bei einem einfachen Aufbau der Haltevorrichtung. Weiterhin soll ein Haltesystem vorgeschlagen werden, das eine erfindungsgemäße Haltevorrichtung in Wirkverbindung mit einem elektrischen Antrieb umfasst. Die Leistungsdaten eines elektrischen Antriebs sollen im dynamischen Betrieb so wenig wie möglich beeinflusst und die Geräuschentwicklung geringgehalten werden.

Diese Aufgabe wird gelöst durch eine Haltevorrichtung umfassend ein Weicheisenelement und einen Magneten, welche konzentrisch zueinander angeordnet sind, wobei der Magnet in Wirkverbindung mit dem Weicheisenelement in einem statischen Zustand ein Haltemoment auf eine Welle ausübt, wobei der Magnet auf der Welle angeordnet ist, am Innenumfang des Weicheisenelements (UE), und eine zweite rotierende Komponente (K2) bildet und wobei die Haltevorrichtung mit einem der beiden Lagerschilde eines elektrischen Antriebs in Verbindung steht. Bei den Lagerschilden kann es sich um das A-seitiges (Antriebsseite) Lagerschild oder B-seitiges (der Antriebsseite gegenüberliegenden Seite, Abtriebsseite) Lagerschild handeln. Alternativ kann statt des A-seitigen oder B-seitigen Lagerschilds eine Adapterplatte vorgesehen sein.

Diese Aufgabe wird alternativ gelöst durch eine Haltevorrichtung umfassend ein Weicheisenelement und einen Magneten, welche konzentrisch zueinander angeordnet sind, wobei der Magnet in Wirkverbindung mit dem Weicheisenelement in einem statischen Zustand ein Haltemoment auf eine Welle ausübt, wobei das Weicheisenelement auf der Welle angeordnet ist, am Innenumfang (UM) des Magneten, und eine erste rotierende Komponente (K1) bildet und wobei die Haltevorrichtung mit einem der beiden Lagerschilde eines elektrischen Antriebs in Verbindung steht. Bei den Lagerschilden kann es sich um das A-seitiges (Antriebsseite) Lagerschild oder B-seitiges (der Antriebsseite gegenüberliegenden Seite, Abtriebsseite) Lagerschild handeln. Alternativ kann statt des A-seitigen oder B-seitigen Lagerschilds eine Adapterplatte vorgesehen sein.

Vorteilhaft kann durch die erfindungsgemäße Haltevorrichtung ein signifikant erhöhtes Haltemoment aufgebracht werden, um die Welle durch das ausgeübte Haltemoment in Position zu halten. Beispielsweise kann hierdurch ein Rollo in Position gehalten werden, falls etwa der Raum nur zum Teil durch dieses verdunkelt werden soll, nachdem dieser abgebremst wurde. Die Haltekraft für das Haltemoment wird erzeugt durch die Wechselwirkung des Magnets mit dem Weicheisenelement auf Grundlage einer wirkenden Reluktanzkraft. Durch die konzentrische (oder koaxiale) Anordnung von Weicheisenelement und Magnet, die mit einer Applikation wie etwa einem Rollo verbunden ist, ist eine beliebige Dimensionierung der Bauteile der Haltevorrichtung möglich. Die Bereitstellung eines Haltemoments (etwa durch einen größeren Magneten) ist justierbar. Ein einfacher Aufbau durch wenige Bauteile ist vorteilhaft möglich. Es ist besonders bevorzugt vorgesehen, dass nur ein einzelner, zusammenhängender Magnet konzentrisch mit dem Weicheisenmaterial angeordnet ist.

Der Magnet ist aus bekanntem permanentmagnetischem Material hergestellt, beispielsweise aus einem Neodym-Eisen-Bor Werkstoff. Weitere Beispiele für Dauermagneten sind der Fachperson wohlbekannt.

Der statische Zustand ist definiert durch die Zeit, während derer das Drehmoment der Welle nicht überwunden wird. Im Gegensatz dazu ist der dynamische Zustand definiert dadurch, dass die Welle sich bewegt (beispielsweise durch eine extern angelegte Antriebskraft) und das applizierte Haltemoment überwindet.

Die Haltevorrichtung, alternativ durch eine separate angebaute Bremse oder etwa durch einen angebauten elektrischen Antrieb der selbst als Bremse wirken kann, kann in einer Ausgestaltung auch das Abbremsen der verbundenen Applikation einleiten. Die magnetische Wechselwirkung zwischen Weicheisenelement und dem Magneten sorgt für die Haltekraft auf die Welle und somit für das erhöhte Haltemoment, so dass die Welle an einer Position verbleibt. Die erfindungsgemäße Haltevorrichtung benötigt keine separate Energieversorgung, ist also unbestromt. Die vorteilhafte Drehmomentvarianz der Haltevorrichtung kann dazu genutzt werden, das Vibrationsverhalten des Gesamtantriebs beim Betrieb des Rollos zu verbessern.

In einer Ausführungsform umfasst die Haltevorrichtung ein Weicheisenelement und einen Magneten, welche konzentrisch zueinander angeordnet sind, wobei der Magnet in Wirkverbindung mit dem Weicheisenelement in einem statischen Zustand ein Haltemoment auf eine Welle ausübt, wobei der Magnet auf der Welle angeordnet ist, am Innenumfang (oder entlang dessen, oder innerhalb) des Weicheisenelements, und bildet eine zweite rotierende Komponente und wobei die Haltevorrichtung mit einem der beiden Lagerschilde eines elektrischen Antriebs in Verbindung steht. Hierbei ist der Magnet (fest, statisch) an der Welle angeordnet und kann zusammen mit der Welle rotieren. Das Weicheisenelement verbleibt starr befestigt in Position. Zwischen der zweiten rotierenden Komponente, bzw. dem Magnet und dem umgebenden Weicheisenelement ist ein vordefinierter Abstand in Form eines Luftspalts vorgesehen. Mit anderen Worten ist der Magnet als zweite rotierende Komponente so auf der Welle angeordnet, dass er während des dynamischen Zustands mit dieser zusammen rotieren kann. Das Weicheiselement ist auch während des dynamischen Zustands auf fester Position. Im statischen Zustand, also bei Stillstand der zweiten rotierenden Komponente bewirkt die Wechselwirkung zwischen dem Magneten und dem Weicheisenelement, dass ein Haltemoment auf die Welle ausgeübt wird. Die zweite rotierende Komponente bleibt während dieser Zeit im statischen Zustand unbeweglich. Die Welle kann durch das durch die Magnetkraft ausgeübte Haltemoment nicht mehr rotieren und bleibt in Position. Vorteilhaft ist es hierdurch möglich, ein an die Vorrichtung angebaute Einrichtung wie beispielsweise ein Rollo an einer Position zu halten, aber auch zu stoppen. Es kann vorgesehen sein, dass das Weicheisenelement als Bauteil den Magneten ganz oder teilweise aufnimmt, ein- oder umschließt. Dies ermöglicht einen kompakten, effizienten Aufbau der Vorrichtung.

In einer alternativen Ausführungsform umfasst die Haltevorrichtung ein Weicheisenelement und einen Magneten, welche konzentrisch zueinander angeordnet sind, wobei der Magnet in Wirkverbindung mit dem Weicheisenelement in einem statischen Zustand ein Haltemoment auf eine Welle ausübt, wobei das Weicheisenelement auf der Welle angeordnet ist, am Innenumfang (oder entlang dessen, oder innerhalb) des Magneten, und bildet eine erste rotierende Komponente und wobei die Haltevorrichtung mit einem der beiden Lagerschilde eines elektrischen Antriebs in Verbindung steht. Hierbei ist das Weicheisenelement (fest, statisch) an der Welle angeordnet und kann zusammen mit der Welle rotieren. Der Magnet verbleibt starr befestigt in Position. Zwischen der ersten rotierenden Komponente, bzw. dem Weicheisenelement und dem umgebenden Magneten ist ein vordefinierter Abstand in Form eines Luftspalts vorgesehen. Mit anderen Worten ist das Weicheisenelement als erste rotierende Komponente so auf der Welle angeordnet, dass es während des dynamischen Zustands mit dieser zusammen rotieren kann. Der Magnet ist auch während des dynamischen Zustands auf fester Position. Im statischen Zustand, also bei Stillstand der ersten rotierenden Komponente bewirkt die Wechselwirkung zwischen dem Magneten und dem Weicheisenelement, dass ein Haltemoment auf die Welle ausgeübt wird. Die erste rotierende Komponente bleibt während dieser Zeit im statischen Zustand unbeweglich. Die Welle kann durch das durch die Magnetkraft ausgeübte Haltemoment nicht mehr rotieren und bleibt in Position. Vorteilhaft ist es hierdurch möglich, ein an die Vorrichtung angebaute Einrichtung wie beispielsweise ein Rollo an einer Position zu halten, möglicherweise aber auch zu stoppen. Es kann vorgesehen sein, dass der Magnet als Bauteil das Weicheisenelement ganz oder teilweise aufnimmt, ein- oder umschließt. Dies ermöglicht einen kompakten, effizienten Aufbau der Vorrichtung.

Eines der beiden Lagerschilde kann einen Magneten und das Weicheisenelement umfassen. Die Lagerschilde können aus Kunststoff oder aus einem geeigneten, der Fachperson bekannten, Material bestehen und Magnet oder Weicheisenelement beinhalten. Die Lagerschilde bieten beispielsweise Schutz vor Korrosion durch eindringende Feuchtigkeit oder Verschmutzung. Auch kann gemäß den vorherigen alternativen Ausgestaltungen der Magnet bzw. das Weicheisenelement innerhalb eines der beiden Lagerschilde so befestigt oder angeordnet sein, dass es statisch fest in Position verbleibt, während die erste bzw. die zweite rotierende Komponente beweglich auf der Welle angebracht ist.

In einer Weiterbildung steht die Haltevorrichtung mit einem Ritzel, das auf der Welle befestigt ist, in Wirkverbindung und wird von dem Lagerschild umfasst. Hierbei ist das Lagerschild das A-seitige Lagerschild auf der Antriebsseite. Auf der Antriebsseite befindet sich auch das Ritzel. Dabei ist das A-seitige Lagerschild als integrales Lagerschild ausgebildet. Auf der der Antriebsseite gegenüberliegenden Seite (Abtriebsseite, B-seitiges Lagerschild) des elektrischen Antriebs befinden sich die elektrischen Anschlüsse bzw. Kontaktierungen des elektrischen Antriebs.

In einer vorteilhaften Ausgestaltung der Erfindung weist das Weicheisenelement in seinem Innenumfang oder an seinem Außenumfang eine Mehrzahl von Polzähnen auf.

Weiterhin vorteilhaft sind die Mehrzahl der Polzähne des Weicheisenelements relativ zur Anzahl der Pole des mindestens einen Magneten abgestimmt.

Eine geeignete Angleichung der Anordnung von Magnetpolzahl und Zähnezahl der Weicheisenelementkomponente erbringt eine Verbesserung des Vibrationsverhaltens im Betrieb und der Geräuschentwicklung. Die Zahl der Zähne kann variieren und einstellbar sein.

Bevorzugt ist vorgesehen, dass die Polzähne vorzugsweise im gleichen Winkel α zueinander angeordnet sind und/oder eine Polzahnkontur aufweisen. Der Winkel α kann beispielsweise so gestaltet sein, dass (bspw. abhängig von der Polzahl des Magneten) die Polzähne in einem Winkel α von bevorzugt 45° bis 60° vorgesehen sind. Denkbar sind davon abgesehen alle Winkel α im Bereich von 1° bis 90°. Die Kontur der Polzähne kann beispielsweise rund-oval, dreiecksförmig, vierkantig oder hexagonal ausgebildet sein und dem Magnet dadurch anpassbar bleiben. Die Kontur wird durch die Varianz bei der Breite der Polzähne beeinflusst. Eine geringe Zahnbreite kann Einfluss auf den positionsabhängigen magnetischen Widerstand innerhalb einer Rastperiode haben. Das Haltemoment kann hierdurch positiv beeinflusst und erhöht werden.

Weiterhin bevorzugt kann vorsehen sein, dass die Polzähne an ihrem Außenumfang Abschrägungen aufweisen. Dies bringt den Vorteil eines verbesserten Rastmoments. Die Abschrägungen können sich jeweils an den radialen oder axialen Kanten der Polzähne befinden und dabei parallel zueinander oder aufeinander zulaufende aufweisen.

Es kann vorgesehen sein, dass das Haltemoment über die axiale Länge und/oder die Materialauswahl und/oder über einen Luftspalt und/oder eine axiale Überdeckung der rotierenden Komponente (K1, K2) eingestellt wird. Diese Maßnahmen haben vorteilhaft zur Folge, dass im dynamischen Zustand etwaige Leistungsverluste durch die Haltevorrichtung minimiert werden. Das Haltemoment kann auf die Anwendung angepasst werden.

Es kann weiterhin im Innenumfang der (ersten oder zweiten) rotierenden Komponente eine Wellenaufnahme vorgesehen sein, welche die Welle aufnimmt und (radial) sichert. Die Wellenaufnahme kann ein separates Bauteil sein (beispielsweise eine Hülse oder Buchse), das in den Innenumfang der (ersten oder zweiten) rotierenden Komponente eingebracht wird. Alternativ kann die Wellenaufnahme durch die Öffnung der (ersten oder zweiten) rotierenden Komponente selbst ausgebildet werden.

Eine optionale Vorrichtung zur Lagerung der Welle kann ebenfalls zusätzlich vorgesehen sein.

In einer weiteren vorteilhaften Ausgestaltung ist ein weiterer Magnet als Sensormagnet ausgebildet. Beispielsweise können hierbei auch zwei Magnete vorgesehen sein, die in axialer Richtung, bevorzugt auf der Welle, hintereinander angeordnet sind, wobei der zweite Magnet der Sensormagnet ist. Eine Messung beispielsweise der Drehzahl über die magnetischen Eigenschaften der Haltevorrichtung kann hiermit erfolgen. Bekannterweise können Hall-Sensoren zum Einsatz kommen.

Besonders bevorzugt wird das Weicheisenelement oder der Magnet auf die Welle oder das Ritzel aufgepresst. Denkbar ist jedoch auch ein Aufkleben, Aufspritzen oder generell jede der Fachperson geläufige formschlüssige oder kraftschlüssige Verbindung.

Es kann insbesondere vorgesehen sein, dass das Weicheisenelement aus einem weichmagnetischen Material gebildet ist. Das Weicheisenelement ist beispielsweise ein Eisenkern aus einem weichmagnetischen Werkstoff.

Besonders vorteilhaft kann ein Haltesystem vorgesehen sein, das eine Haltevorrichtung gemäß einem der vorherigen Ansprüche und einen elektrischen Antrieb umfasst, wobei die Haltevorrichtung in Wirkverbindung mit dem elektrischen Antrieb steht.

Der elektrische Antrieb ist bevorzugt ein DC-Motor, prinzipiell sind aber auch BLDC-Motoren denkbar oder jede weitere der Fachperson bekannte Form von Antrieben. Die Motorvibration wird durch die Verwendung der Haltevorrichtung gedämpft und verhindert durch einen applizierten Dämpfungseffekt durch die Haltevorrichtung bei der Verwendung. Dies kommt dem Geräuschverhalten positiv entgegen, womit leisere Antriebe mit einer Haltevorrichtung möglich sind. Die Haltevorrichtung kann dem elektrischen Antrieb ein zusätzliches und signifikant erhöhtes Haltemoment zur Verfügung stellen, um vorteilhaft eine Welle in Position zu halten und diese zu verriegeln.

Der elektrische Antrieb des Haltesystems kann außerdem bevorzugt ein Getriebe umfassen. Vorzugsweise entspricht die Welle der Haltevorrichtung der Antriebswelle des elektrischen Antriebs. Somit kann die Haltevorrichtung auf die Antriebswelle ein Haltemoment ausüben und sehr einfach mit dem elektrischen Motor zusammen beispielsweise innerhalb eines Gehäuses eines Rolloantriebs verbaut sein.

In dem bereits beschriebenen statischen Zustand übt der elektrische Antrieb kein Drehmoment auf die Welle aus. Im ebenfalls bereits beschriebenen dynamischen Zustand übt der elektrische Antrieb ein Drehmoment auf die Welle aus.

Der Elektrische Antrieb kann insbesondere röhrenförmig ausgebildet sein. Die schmale, axial langgezogene Form eines Rohrmotor wird verschiedensten Antrieben wie Rollos, Jalousien aber auch Rolltoren verwendet, beispielsweise als Wickelrolle.

Die Erfindung wird nun anhand der in der Zeichnung dargestellten Ausführungsbeispiele im Folgenden näher beschrieben. Es zeigen:
Fig. 1 eine Übersichtsdarstellung eines Haltesystems gemäß eines Ausführungsbeispiels;
Fig. 2 eine Übersichtsdarstellung eines Haltesystems gemäß eines weiteren Ausführungsbeispiels;
Fig. 3 eine Detailansicht aus Fig. 1;
Fig. 4 eine Detailansicht aus Fig. 2;
Fig. 5 eine Übersichtsdarstellung eines Haltesystems gemäß eines weiteren Ausführungsbeispiels;
Fig. 6 eine Übersichtsdarstellung eines Haltesystems gemäß eines weiteren Ausführungsbeispiels.

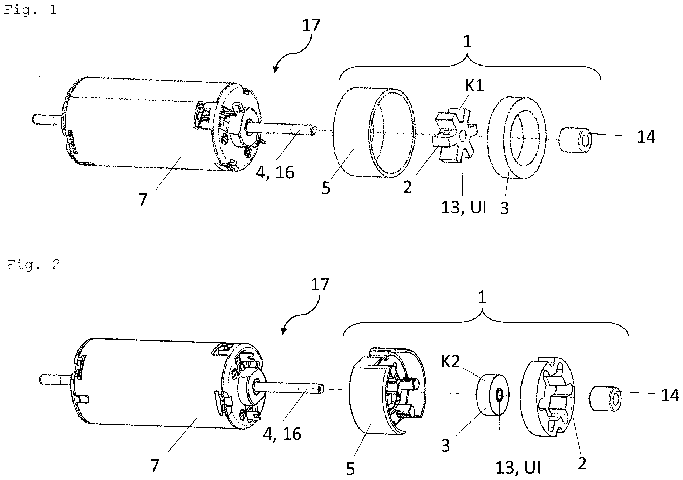

Fig. 1 zeigt eine Übersichtsdarstellung eines Haltesystems (17) gemäß eines Ausführungsbeispiels. Das Haltesystem (17) umfasst eine Haltevorrichtung (1) sowie einen elektrischen Antrieb (7). Die Antriebswelle (16) des elektrischen Antriebs (7) kann einer Welle (4) entsprechen, die von der Haltevorrichtung (1) umfasst ist. Mit anderen Worten teilen sich die Haltevorrichtung (1) und der elektrische Antrieb (7) eine gemeinsame Welle (4, 16), die ihrerseits mit der Applikation (z. B. ein Rollo) über ein Getriebe (15) (hier nicht gezeigt) (beispielsweise ein elektrisch betriebenes Rollo) verbunden ist. Durch die Rotation der Welle (4, 16) über den elektrischen Antrieb (7) kann die verbundene Applikation nach oben oder unten bewegt werden. Durch Stopp der Welle durch den elektrischen Antrieb (7) stoppt die Welle (4, 16) die rotatorische Bewegung innerhalb eines dynamischen Zustands und geht in einen statischen Zustand über. Durch die Haltekraft, die die Haltevorrichtung (1) auf die Welle (4) ausübt, wird ein signifikant erhöhtes Haltemoment durch die Haltevorrichtung (1) bereitgestellt. Somit kann die Welle (4) beispielsweise in der Position gehalten und fixiert werden und verbleibt in dieser so lange wie gewünscht. Dieses Haltemoment muss durch den elektrischen Antrieb (7) zunächst überwunden werden, wenn ein Benutzer eine entsprechende Eingabe macht, um die Welle (4) wieder in Bewegung zu versetzen. Weiterhin ist ein Getriebe vorgesehen (nicht dargestellt), vorzugsweise an einem Ende der Haltevorrichtung (1). Die elektrische Verbindung zu einer Energieversorgung erfolgt über Anschlussdrähte (hier nicht dargestellt).

Im Ausführungsbeispiel zeigt die Haltevorrichtung (1) vorteilhaft den gleichen Außendurchmesser wie der elektrische Antrieb (7) einschließlich des Lagerschilds (5), dass die Komponenten der Haltevorrichtung (1) umgeben. Eine Integration in oder als Rohrmotor in einem gemeinsamen Gehäuse ist somit vorteilhaft möglich. Die Haltevorrichtung (1) stellt das Haltemoment bereit, ohne dass es beim Haltesystem (17) zu einer erhöhten Geräuschentwicklung und/oder Vibration der Bauteile kommt. Dies ist weiterhin vorteilhaft verschleißmindernd.

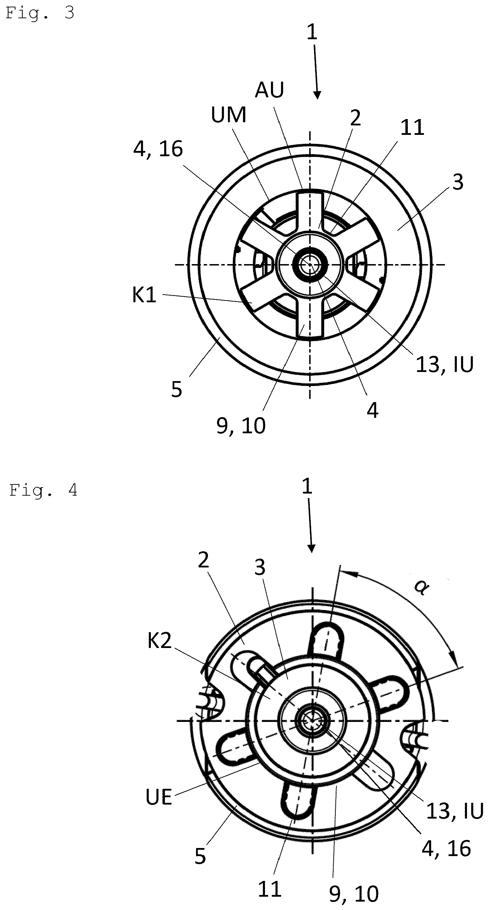

Wie in Verbindung mit der Detaildarstellung der Fig. 3 zu erkennen, umfasst die Haltevorrichtung (1) ein Weicheisenelement (2) und einen Magnet (3), wobei im Ausführungsbeispiel das Weicheisenelement (2) im Innenumfangs (UM) des Magnets (3) konzentrisch angeordnet ist. Die Welle (4) kann durch eine Wellenaufnahme im Weicheisenelement (2) aufgenommen sein. Das Weicheisenelement (2) ist fest mit der Welle (4) verbunden, beispielsweise durch Aufpressen, und rotiert mit der sich bewegenden Welle (4) mit. Somit bildet das Weicheisenelement (2) eine erste rotierende Komponente (K1) aus. Der um das Weicheisenelement (2) angeordnete Magnet (3) ist von dem Lagerschild (6) umgeben und ist feststehend in diesem Ausführungsbeispiel. Das Weicheisenelement (2) bildet an dessen Außenumfang (AU) mehrere Pole (10) mit Polzähnen (9) aus. Das Weicheisenelement (2) zeigt verschiedene Polzahnkonturen (11), im Beispiel eckig, jedoch sind auch abgeschrägte oder abgerundete Formen möglich.

Fig. 1 und 3 zeigen ferner, dass neben dem Magneten (3) ein weiterer Magnet in Form eines Sensormagneten (14) (alternativ eine Impulsscheibe für beispielsweise einen magnetischen oder einen optischen Encoder) vorgesehen ist. Insbesondere ist der Sensormagnet (14) axial nach dem Magneten (3) angeordnet, vorzugsweise aber außerhalb des Weicheisenelements (2). Eine einteilige Anordnung ist auch denkbar.

Eine Zusammenwirkung mit einem Hall-Sensor kann vorgesehen sein.

Fig. 2 zeigt eine Übersichtsdarstellung eines Haltesystems (17) gemäß eines weiteren Ausführungsbeispiels. Das Haltesystem (17) umfasst auch in diesem Ausführungsbeispiel eine Haltevorrichtung (1) sowie einen elektrischen Antrieb (7). Die Antriebswelle (16) des elektrischen Antriebs kann einer Welle (4) entsprechen, die von der Haltevorrichtung (1) umfasst ist. Mit anderen Worten teilen sich die Haltevorrichtung (1) und der elektrische Antrieb (7) eine gemeinsame Welle (4, 16), die ihrerseits mit der Applikation über ein Getriebe (beispielsweise ein elektrisch betriebenes Rollo) verbunden ist. Durch die Rotation der Welle (4, 16) über den elektrischen Antrieb (7) kann die verbundene Applikation (z.B. ein Rollo) nach oben oder unten bewegt werden.

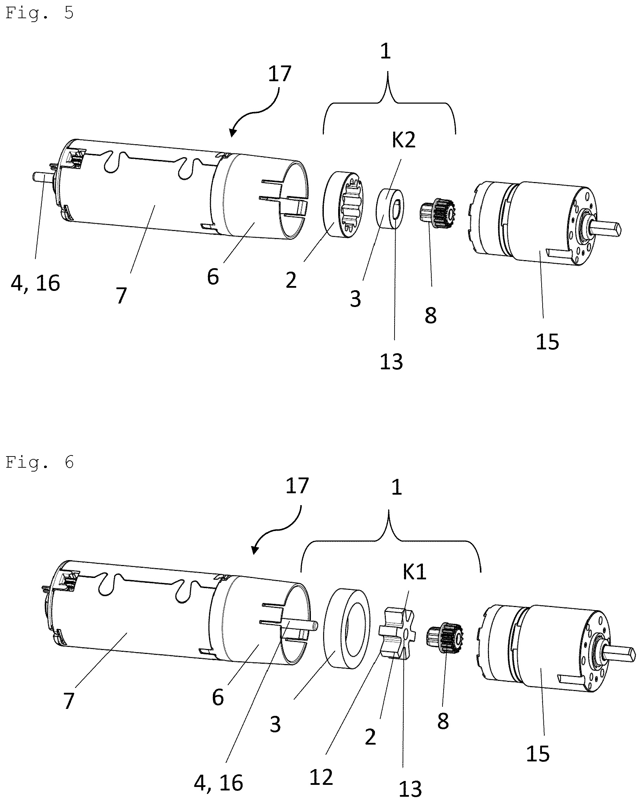

Durch Stopp der Welle durch den elektrischen Antrieb (7) stoppt die Welle (4, 16) die rotatorische Bewegung innerhalb eines dynamischen Zustands und geht in einen statischen Zustand über. Durch die Haltekraft, die die Haltevorrichtung (1) auf die Welle (4) ausübt, wird ein signifikant erhöhtes Haltemoment durch die Haltevorrichtung (1) bereitgestellt. Somit kann die Welle (4) beispielsweise in der Position gehalten und fixiert werden und verbleibt in dieser so lange wie gewünscht. Dieses Haltemoment muss durch den elektrischen Antrieb (7) zunächst überwunden werden, wenn ein Benutzer eine entsprechende Eingabe macht, um die Welle (4) wieder in Bewegung zu versetzen. Weiterhin ist ein Getriebe 15 vorgesehen (in Fig. 5 und 6 dargestellt), vorzugsweise an einem Ende der Haltevorrichtung (1).

Auch in diesem Ausführungsbeispiel zeigt die Haltevorrichtung (1) vorteilhaft den gleichen Außendurchmesser wie der elektrische Antrieb (7) einschließlich eines Lagerschilds (5), dass die Komponenten der Haltevorrichtung (1) umgeben. Eine Integration in oder als Rohrmotor in einem gemeinsamen Gehäuse ist somit vorteilhaft möglich. Die Haltevorrichtung (1) stellt das Haltemoment bereit, ohne dass es beim Haltesystem (17) zu einer erhöhten Geräuschentwicklung und/oder Vibration der Bauteile kommt. Dies ist vorteilhaft verschleißmindernd.

Wie in Verbindung mit der Detaildarstellung der Fig. 4 zu erkennen, sind ein Weicheisenelement (2) und ein Magnet (3) von der Haltevorrichtung (1) umfasst, wobei im Ausführungsbeispiel der Magnet (3) innerhalb des Innenumfangs (UE) des Weicheisenelements (konzentrisch) angeordnet ist. Die Welle (4) ist durch eine Wellenaufnahme (13) im Magnet (3) aufgenommen. Der Magnet (3) ist fest mit der Welle (4) verbunden, beispielsweise durch Aufpressen und rotiert mit der sich bewegenden Welle (4) mit. Somit bildet der Magnet (3) eine zweite rotierende Komponente (K2) aus. Das um den Magneten (3) angeordnete Weicheisenelement (2) ist von dem Lagerschild (5) umgeben und ist feststehend in diesem Ausführungsbeispiel. Das Weicheisenelement (2) bildet an dessen Innenumfang (UE) mehrere Pole (10) mit Polzähnen (9) aus. Das Weicheisenelement (2) zeigt verschiedene Polzahnkonturen (11).

Fig. 2 und 4 zeigen ferner, dass neben dem Magneten (3) ein weiterer Magnet in Form eines Sensormagneten (14) (alternativ eine Impulsscheibe für beispielsweise einen magnetischen oder einen optischen Encoder) vorgesehen ist. Insbesondere ist der Sensormagnet (14) axial nach dem Magneten (3) angeordnet, vorzugsweise aber außerhalb des Magneten (3) oder Weicheisenelements (2). Eine einteilige Anordnung ist auch denkbar. Eine Zusammenwirkung mit einem Hall-Sensor kann vorgesehen sein.

Fig. 4 zeigt ferner, dass das Weicheisenelement (2) mit verschiedenen, in Abhängigkeit vom vorgesehenen Winkel α, angeordneten Polzähnen (9) der Pole (10) des Weicheisenelements (2). Die Polzähne (9) sind in einem Winkel α von bevorzugt 10° bis 60°, insbesondere zwischen 20° bis 30°, besonders bevorzugt 30°, vorgesehen rundum angeordnet. Denkbar sind auch Winkel α im Bereich von 1° bis 90°. Die jeweilige Polzahnkontur (11) ist in dem gezeigten Beispiel rund bis oval, kann jedoch auch eckig, dreieckig oder dergleichen ausgestaltet sein.

Auch wenn die Erfindung mehrere Male am Beispiel eines elektrisch betriebenen Rollos erklärt wurde, so ist dieses nicht auf solche Systeme beschränkt. Vielmehr kann die erfindungsgemäße Haltevorrichtung bzw. das Haltsystems auch in vielen anderen technischen Gebieten zum Einsatz kommen, die in Wirkverbindung mit einem (elektrischen) Antrieb stehen. Möglich ist auch der Einsatz der Haltevorrichtung als Bremse oder als Kupplung. Prinzipiell ist die Haltevorrichtung mit bestehenden elektrischen Antrieben verwendbar, es kann somit eine Haltevorrichtung nachgerüstet werden. Die Erfindung beschränkt sich nicht auf einen Getriebemotor und auch nicht auf die Applikation eines Antriebs für Rollos. Vielmehr ist dieses Applikation als Beispiel zu verstehen, um die Erfindung der Fachperson anschaulich zu erläutern. Prinzipiell kann ein solches System mit jeweils angepassten Dimensionen und Magnetmaterialien an jeden Motor- und Getriebemotor angebracht werden und in jeder Applikation wirken, die ein erhöhtes Haltemoment im statischen Zustand erfordert.

Fig. 5 zeigt eine Haltevorrichtung (1) mit einem Weicheisenelement (2) und einem Magneten (3), welche konzentrisch zueinander angeordnet sind, wobei der Magnet (3) in Wirkverbindung mit dem Weicheisenelement (2) in einem statischen Zustand ein Haltemoment auf die Welle (4) ausübt. Der Magnet (3) ist auf dem Ritzel (8) angeordnet, das auf der Welle (4) befestigt ist. Der Magnet (3) ist am Innenumfang des Weicheisenelements (UE) angeordnet und bildet eine zweite rotierende Komponente (K2) aus. Die Haltevorrichtung (1) steht mit dem Lagerschild (6) des elektrischen Antriebs (7) in Verbindung. Das Weicheisenelement (2) weist an seinem Innenumfang (UE) eine Mehrzahl von Polzähnen (9) auf. Am Innenumfang (IU) der rotierenden Komponenten (K1, K2) ist eine Wellenaufnahme (13) vorgesehen. Der elektrische Antrieb (7) umfasst ein Getriebe (15).

Fig. 6 zeigt eine Haltevorrichtung (1) mit einem Weicheisenelement (2) und einem Magneten (3), welche konzentrisch zueinander angeordnet sind, wobei der Magnet (3) in Wirkverbindung mit dem Weicheisenelement (2) in einem statischen Zustand ein Haltemoment auf eine Welle (4) ausübt. Das Weicheisenelement (2) ist auf dem Ritzel (8) angeordnet, das auf der Welle (4) befestigt ist. Das Weicheisenelement (2) ist am Innenumfang (UM) des Magneten (3) angeordnet und bildet eine erste rotierende Komponente (K1) aus. Die Haltevorrichtung (1) steht mit dem Lagerschild (6) des elektrischen Antriebs (7) in Verbindung. Das Weicheisenelement (2) weist an seinem Außenumfang (AU) eine Mehrzahl von Polzähnen (9) auf. Die Polzähne (9) weisen an ihrem Außenumfang Abschrägungen (12) auf. Am Innenumfang (IU) der rotierenden Komponenten (K1, K2) ist eine Wellenaufnahme (13) vorgesehen. Der elektrische Antrieb (7) umfasst ein Getriebe (15).

### Bezugszeichenliste

- 1: Haltevorrichtung
- 2: Weicheisenelement
- 3: Magnet
- 4: Welle
- 5: Lagerschild
- 6: Lagerschild
- 7: Elektrischer Antrieb
- 8: Ritzel
- 9: Polzähne
- 10: Pole
- 11: Polzahnkontur
- 12: Abschrägung
- 13: Wellenaufnahme
- 14: Sensormagnet
- 15: Getriebe
- 16: Antriebswelle
- 17: Haltesystem

- K1: Erste rotierende Komponente
- K2: Zweite rotierende Komponente
- UM: Innenumfang des Magneten
- UE: Innenumfang des Weicheisenelements
- AU: Außenumfang des Weicheisenelements

## Patentansprüche

1. Haltevorrichtung (1) umfassend ein Weicheisenelement (2) und einen Magneten (3), welche konzentrisch zueinander angeordnet sind, wobei der Magnet (3) in Wirkverbindung mit dem Weicheisenelement (2) in einem statischen Zustand ein Haltemoment auf eine Welle (4) ausübt, wobei der Magnet (3) auf der Welle (4) angeordnet ist, am Innenumfang des Weicheisenelements (UE), und eine zweite rotierende Komponente (K2) bildet und wobei die Haltevorrichtung (1) mit einem der beiden Lagerschilde (5, 6) eines elektrischen Antriebs (7) in Verbindung steht.

2. Haltevorrichtung (1) umfassend ein Weicheisenelement (2) und einen Magneten (3), welche konzentrisch zueinander angeordnet sind, wobei der Magnet (3) in Wirkverbindung mit dem Weicheisenelement (2) in einem statischen Zustand ein Haltemoment auf eine Welle (4) ausübt, wobei das Weicheisenelement (2) auf der Welle (4) angeordnet ist, am Innenumfang (UM) des Magneten (3), und eine erste rotierende Komponente (K1) bildet und wobei die Haltevorrichtung (1) mit einem der beiden Lagerschilde (5, 6) eines elektrischen Antriebs (7) in Verbindung steht.

3. Haltevorrichtung nach Anspruch 1 oder 2, wobei die Haltevorrichtung (1) mit einem Ritzel (8), das auf der Welle (4) vorgesehen ist, in Wirkverbindung steht und von dem Lagerschild (5, 6) umfasst wird

4. Haltevorrichtung nach Anspruch 1 oder 2, wobei das Weicheisenelement (2) in seinem Innenumfang (UE) oder an seinem Außenumfang (AU) eine Mehrzahl von Polzähnen (9) aufweist.

5. Haltevorrichtung nach Anspruch 4, wobei die Mehrzahl der Polzähne (9) des Weicheisenelements (2) relativ zur Anzahl der Pole (10) des Magneten (3) abgestimmt sind.

6. Haltevorrichtung nach Anspruch 4 oder 5, wobei die Polzähne (9) vorzugsweise im gleichen Winkel α zueinander angeordnet sind und/oder eine Polzahnkontur (11) aufweisen.

7. Haltevorrichtung nach Anspruch 4, 5 oder 6, wobei die Polzähne (9) an ihrem Außenumfang Abschrägungen (12) aufweisen.

8. Haltevorrichtung nach einem der vorherigen Ansprüche, wobei das Haltemoment über die axiale Länge und/oder die Materialauswahl und/oder über einen Luftspalt und/oder eine axiale Überdeckung der rotierenden Komponente (K1, K2) eingestellt wird.

9. Haltevorrichtung nach einem der vorherigen Ansprüche, wobei im Innenumfang (IU) der rotierenden Komponente (K1, K2) eine Wellenaufnahme (13) vorgesehen ist.

10. Haltevorrichtung nach einem der vorherigen Ansprüche, wobei ein weiterer Magnet zusätzlich als Sensormagnet (14) ausgebildet ist.

11. Haltevorrichtung nach einem der vorherigen Ansprüche, wobei das Weicheisenelement (2) oder der Magnet (3) auf die Welle (4) oder das Ritzel (8) aufgepresst wird.

12. Haltevorrichtung nach einem der vorherigen Ansprüche, wobei das Weicheisenelement (2) aus einem weichmagnetischen Material gebildet ist.

13. Haltesystem (17) umfassend eine Haltevorrichtung (1) gemäß einem der vorherigen Ansprüche und einen elektrischen Antrieb (7), wobei die Haltevorrichtung (1) in Wirkverbindung mit dem elektrischen Antrieb (7) steht.

14. Haltesystem gemäß Anspruch 13, wobei der elektrische Antrieb (7) ein Getriebe (15) umfasst.

15. Haltesystem nach Anspruch 13 oder 14, wobei die Welle (4) der Haltevorrichtung (1) einer Antriebswelle (16) des elektrischen Antriebs (7) entspricht.
